# EUROPEAN PATENT APPLICATION

(11) **EP 3 950 170 A1**
(43) Date of publication of application: **09.02.2022**
(21) Application number: 20777583.4
(22) Date of filing: 05.03.2020
(51) Int. Cl.: B22D 17/32, B29C 45/76

(54) **PREVIEW DISPLAY FUNCTION FOR OPERATION OF INJECTION MOLDING MACHINE**

(30) Priority: 27.03.2019 JP 2019061099
(71) Applicant: Nissei Plastic Industrial Co., Ltd., Hanishina-gun, Nagano-ken 389-0693 (JP)
(72) Inventor: TANAKA, Syuto, Hanishina-gun, Nagano 389-0693 (JP); TANICHI, Yasujiro, Hanishina-gun, Nagano 389-0693 (JP)
(74) Representative: Mewburn Ellis LLP
(86) International application number: PCT/JP2020/009428
(87) International publication number: WO 2020/195680

(57) **Abstract**

To provide a preview display function that enables preview display and confirmation of various setting operations of an injection molding machine, and an injection molding machine provided therewith. The above-described problem is solved by a preview display function for displaying a preview of operations of an injection molding machine (10), in whole or in part. The preview display function comprises a function for setting the operations of the injection molding machine (10), in whole or in part, on a setting screen (2), a function for displaying a preview display screen (4) for displaying the operations thus set, and a function for playing back the operations on the preview display screen (4) thus displayed. At this time, preferably the operations thus set are played back as a moving image displayed three dimensionally or two dimensionally, and the setting screen (2) and the preview display screen (4) are displayed side by side.

## Description

### Field of the Invention

The present invention relates to a preview display function for an operation of an injection molding machine. More specifically, the present invention relates to a preview display function that enables preview display and confirmation of various setting operations of an injection molding machine, and an injection molding machine provided therewith.

### BACKGROUND ART

When operating an injection molding machine, an operator sets (registers) various data including molding conditions in a molding machine controller in advance. In addition, the operator also sets subtle adjustments (changes) corresponding to changes in a material lot, changes in outside air temperature, and the like as necessary. If an error is made in the various setting processes by the operator, the molding machine, a mold, or the like may be damaged.

As a countermeasure for the above-described problem, Patent Document 1, for example, proposes technology designed to avoid failures in which unnecessary changes are made to a portion of molding conditions due to lack of knowledge, an error, or the like of a general operator, and to prevent trouble such as the occurrence of a molding defect and operation shutdown. When a plurality of setting data related to molding conditions registered in a molding machine controller are to be managed, this technology permits changes to the plurality of setting data on the condition that a predetermined password is authenticated on the setting screen displaying the plurality of registered setting data, permits the setting of setting items of the plurality of setting data corresponding to individual setting data that can be changed without requiring password authentication (restriction-removed items), and provides a restriction setting mode that, when the restriction-removed items are displayed on a setting screen (restriction setting screen), allows only changes to the restriction-removed items.

### PRIOR ART DOCUMENTS

### Patent Documents

Patent Document 1: Japanese Laid-Open Patent Application No. 2013-14106

### SUMMARY OF THE INVENTION

### Problems to be Solved by the Invention

The present invention provides means for preventing errors from occurring in various setting processes, and an object thereof is to provide a preview display function that enables preview display and confirmation of various setting operations of an injection molding machine, and an injection molding machine provided therewith.

### Means for Solving the Problems

(1) A preview display function according to the present invention is a function for displaying a preview of operations of an injection molding machine, in whole or in part. The preview display function comprises a function for setting the operations of the injection molding machine, in whole or in part, on a setting screen, a function for displaying a preview display screen for displaying the operations thus set, and a function for playing back the operations on the preview display screen thus displayed.

According to this invention, it is possible to prevent setting errors when setting the operations of the injection molding machine, in whole or in part, and prevent damage to the molding machine, a taking-out machine, a mold, and the like that may occur due to a setting error. The preview display screen can be displayed as a screen separate from the screen used to set the operations and thus, for example, if the operation setting screen and the screen for previewing the operations are displayed side by side, it is possible to modify the operation setting screen while confirming a played-back moving image on the preview display screen and easily and accurately confirm and modify the operations.

In the preview display function according to the present invention, the operations thus set are played back as a moving image displayed three dimensionally or two dimensionally. According to this invention, the operations can be displayed three dimensionally or two dimensionally and can further be played back as a moving image, making it easily confirm the set operations.

In the preview display function according to the present invention, the setting screen and the preview display screen are displayed side by side. According to this invention, it is possible to modify the operation setting screen while confirming the moving image played back on the preview display screen.

In the preview display function according to the present invention, the operations thus set are operations of the injection molding machine, in whole or in part, selected from a mold clamping operation, a mold closing and mold opening operation, an ejector operation, a screw operation, a taking-out machine operation, and the like. According to this invention, each of these operations can be played back and confirmed, making the task of confirming the ejector operation, which is particularly complicated to set, and the like in the setting process easy.

In the function for playing back the operations of the preview display function according to the present invention, a gauge is displayed on the preview display screen. According to this invention, the position of an operation can be confirmed by the displayed gauge. It should be noted that a scale width, a displayed position, and the like of the gauge can also be changed on the screen.

In the preview display function according to the present invention, the gauge is displayed on the same screen as the preview display screen. According to this invention, the position of an operation can be easily confirmed.

In the preview display function according to the present invention, a playback speed of any operation among the operations is set to 100%, and the playback speed of the other operations is slowed down with respect to the operation having the 100% playback speed. According to this invention, the playback speed of a fast operation is set to 100%, making the playback speed of the other operations easy to view and the operations easy to confirm.

In the preview display function according to the present invention, display of the preview display screen or playback of the operations on the preview display screen is performed by selecting a corresponding button provided on the setting screen or the preview display screen. According to this invention, it is convenient to utilize a touch panel function to display the preview display screen or play back the operations.

(2) An injection molding machine according to the present invention comprises the preview display function according to the above-described present invention.

### Effect of the Invention

According to the present invention, the operations of various settings of an injection molding machine are played back and displayed on a preview display screen, making it possible to simulate the operations before actually operating the injection molding machine and prevent damage to the molding machine, a taking-out machine, and a mold caused by a setting error.

### BRIEF DESCRIPTION OF THE DRAWINGS

Fig. 1 is an example of an operation setting screen and a preview display screen displayed by a preview display function according to the present invention.
Fig. 2 is another example of an operation setting screen displayed by the preview display function according to the present invention.
Fig. 3 is an example of a control device that controls the preview display function.
Fig. 4 is an example of an overall view of an injection molding machine.
Figs. 5A and 5B are explanatory views of a mold opening operation and a mold closing operation of a mold closing and mold opening device including an ejector function.
Figs. 6A and 6B are explanatory views of screw operations of an injection device.

### Embodiments of the Invention

The following describes a preview display function for operation of an injection molding machine according to the present invention and an injection molding machine provided therewith, with reference to the drawings. It should be noted that the present invention is not limited to the following embodiments and includes various modifications and applications within the scope of the gist.

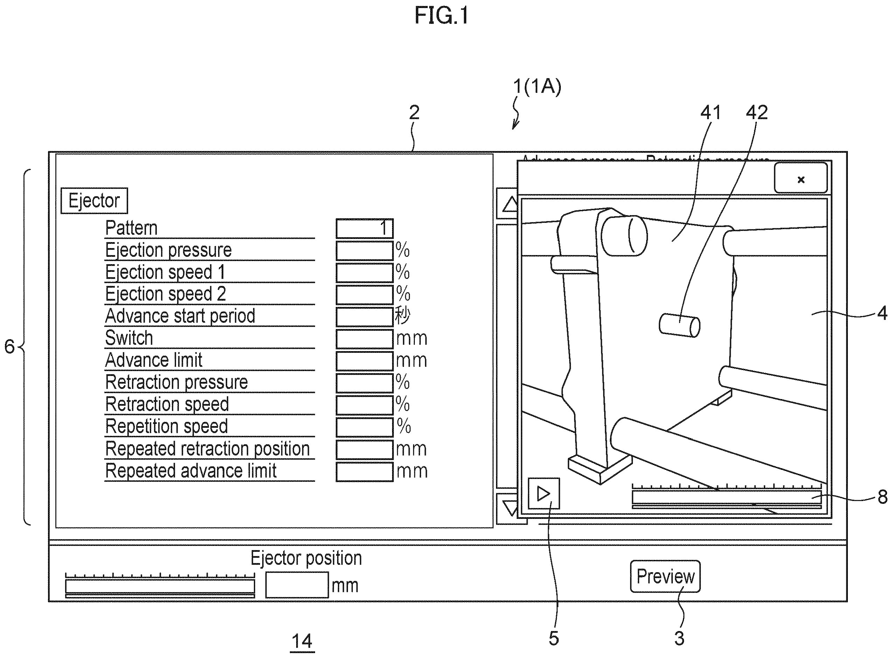

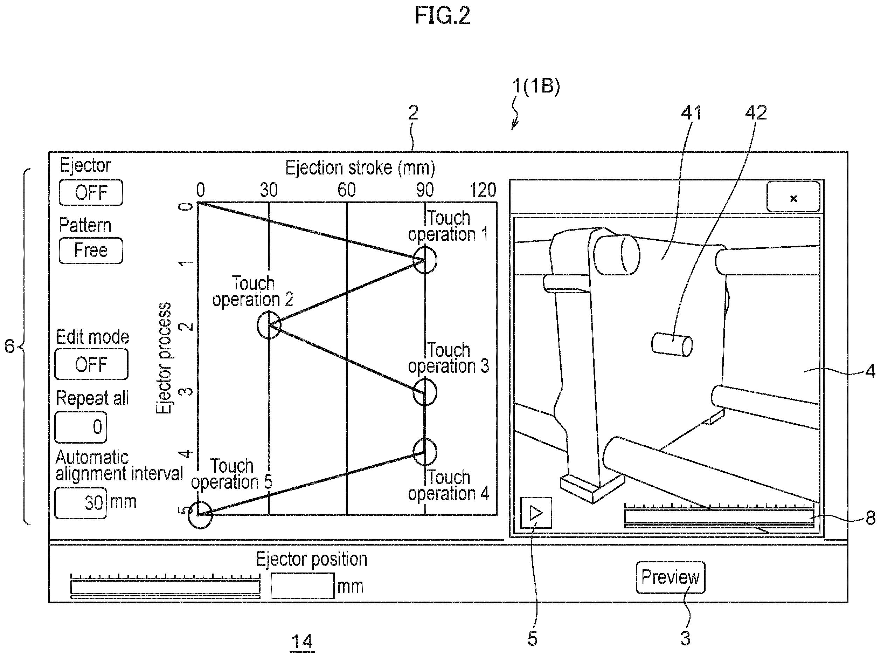

As illustrated in Fig. 1 and Fig. 2, a preview display function 1 according to the present invention is a function for displaying a preview of operations of an injection molding machine 10, in whole or in part. The preview display function 1 includes a function for setting the operations of the injection molding machine 10, in whole or in part, on a setting screen 2, a function for displaying a preview display screen 4 for displaying the operations thus set, and a function for playing back the operations on the preview display screen 4 thus displayed. According to this preview display function 1, it is possible to prevent setting errors when setting the operations of the injection molding machine 10, in whole or in part, and prevent damage to the injection molding machine, a taking-out machine, a mold, or the like that may occur due to a setting error. The preview display screen 4 can be displayed as a screen separate from the screen for setting the operations and thus, for example, if the operation setting screen and the screen for previewing the operations are displayed side by side, it is possible to modify the operation setting screen while confirming the played-back moving image on the preview display screen 4 and easily and accurately confirm and modify the operations.

The following describes each component.

### (Injection molding machine)

The injection molding machine 10 includes the preview display function 1 according to the present invention. The preview display function 1 is a function of a display device 14 provided in the injection molding machine 10, and is applied to operation confirmation of a mold 21 of a device 13 that performs mold clamping and mold opening and mold closing (in the present application, the device having these functions is referred to as the "mold clamping device 13"). However, application is not limited to confirmation of the opening and closing operation of the mold 21, and the preview display function 1 is preferably applied as a function as well, including confirmation of a high-pressure mold clamping operation and position in the mold clamping device 13, confirmation of a mold opening and mold closing operation and position, confirmation of an ejector operation by an ejector mechanism provided to the mold clamping device 13 and an ejector rod position, confirmation of a screw operation and a screw position in an injection device 12, confirmation of a lowering operation and a lowering position in a taking-out machine, and the like.

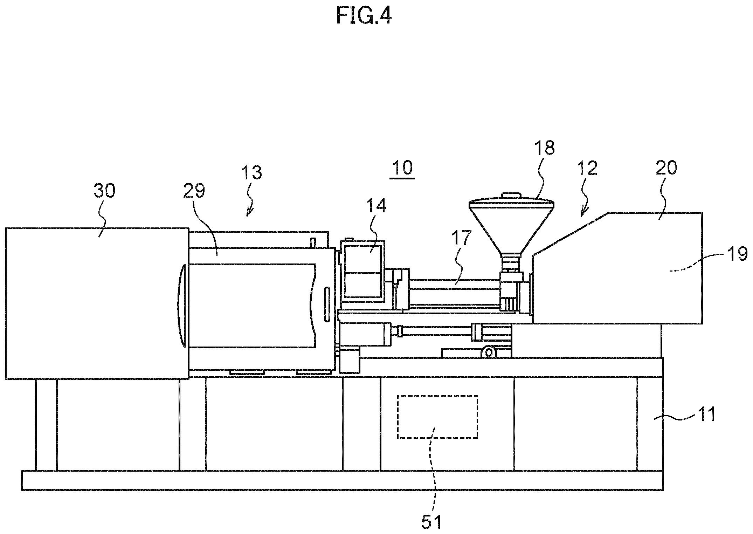

The injection molding machine 10 includes at least the injection device 12, the mold clamping device 13, the display device 14, and a control device 51, on a machine base 11, as an overall view thereof is illustrated in Fig. 4. A cover 20, a safety door 29, and a cover 30 are provided to a drive part of the injection device 12 and the mold clamping device 13. Although the example of Fig. 4 is a horizontal type of injection molding machine 10, the machine may be a vertical type of injection molding machine and is not particularly limited. Further, the drive system is also not limited, and may be an electric drive or a hydraulic drive.

### (Mold clamping device)

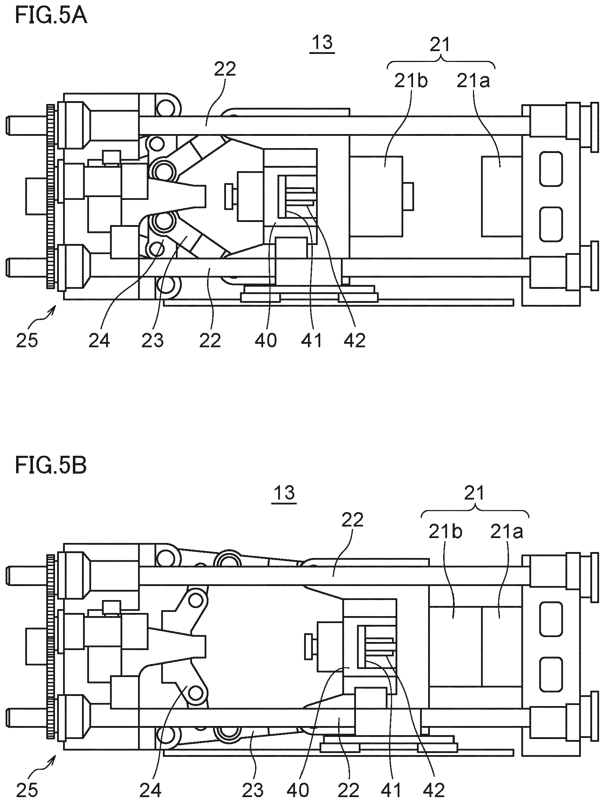

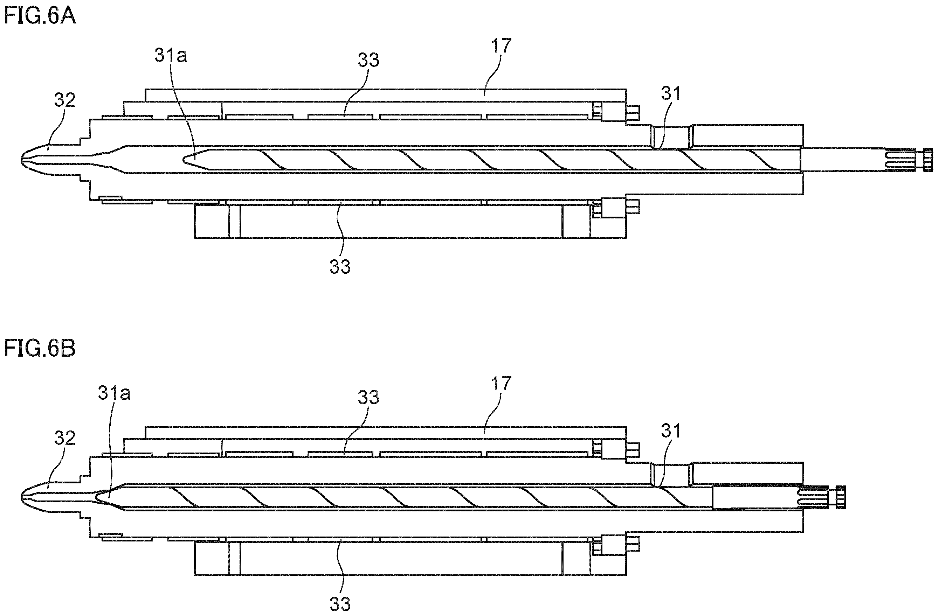

As described above, the mold clamping device 13 refers to a device for performing mold clamping and mold opening and mold closing and, as a device having these functions, is referred to herein as the mold clamping device 13. As illustrated in Figs. 5A and 5B, the mold clamping device 13 includes the mold 21. The mold 21 is filled with plastic injected from a tip-end nozzle 32 (refer to Figs. 6A and 6B) of a heating cylinder 17 provided to the injection device 12. In this mold clamping device 13, after the filled plastic is cooled and solidified, the mold 21 is opened and the molded product is extracted.

The mold clamping device 13 is a device that performs mold clamping (mold closing) and mold opening between a fixed mold 21a and a movable mold 21b and, as illustrated in Figs. 5A and 5B, the movable mold 21b attached to a movable platen is advanced and retracted. The advancing and retracting of the movable mold 21b is performed by a conventionally known means for driving a mold clamping drive part 25 and, using a toggle link 23 and a crosshead 24, extending or bending the toggle link 23. It should be noted that reference sign 22 refers to four erected tie bars, each supporting the movable platen to which the movable mold 21b is attached and guiding the advancing and retracting.

While the operation of the movable mold 21b is set in the mold clamping device 13, the setting operation can be confirmed with the preview display function 1 according to the present invention. The movable mold 21b performs a plurality of operations during injection molding. However, by previewing the operations, it is possible to confirm, among the operations of the movable mold 21b illustrated in Figs. 5A and 5B, the mold opening and closing operation. This confirmation makes it possible to easily visually confirm whether or not the settings of the opening and closing operation are correct and, with confirmation of the opening and closing operation, makes it easy to change the settings of the operation of the movable mold 21b as necessary.

### (Injection device)

As illustrated in Fig. 4 and Figs. 6A and 6B, the injection device 12 is mainly constituted by the heating cylinder 17 that plasticizes a plastic material, a hopper 18 that stores the plastic material supplied to the heating cylinder 17, and an injection cylinder 19. A screw 31 is provided to an interior of the heating cylinder 17. The plastic material supplied from the hopper 18 to the interior of the heating cylinder 17 is heated by a heater 33 wrapped on an outer periphery, measured while being plasticized, fed to a tip end side by a rotating operation of the screw 31, and injected from the tip-end nozzle 32 with advancement of the screw 31. In the injection cylinder 19, a hydraulic driving device or an electric driving device is used as a driving power source.

As illustrated in Figs. 6A and 6B, the screw 31 provided in the heating cylinder 17 performs a rotating operation, an advancing operation, and a retracting operation. The preview display function 1 according to the present invention allows preview and confirmation of the operations (advancing operation, retracting operation, rotating operation, and the like) of this screw 31. By previewing the operations of the screw 31, it is possible to confirm, among the operations of the screw 31 illustrated in Figs. 6A and 6B, screw advancing and retracting and screw rotation, and change the setting conditions of the operations of the screw 31 as necessary.

### (Preview display function)

As illustrated in Fig. 1 and Fig. 2, the preview display function 1 is a function for displaying a preview of the operations of the injection molding machine 10, in whole or in part. Examples of the operations for which a preview is displayed include main operations such as the mold clamping operation, the mold closing and mold opening operation (also referred to as the mold opening and closing operation), the ejector operation, the screw operation, and the taking-out machine operation. The targets to be displayed in the preview are not limited to these operations, and may be other operations, such as, for example, a mold position at the time of mold clamping, and mold closing and mold opening, a position of the ejector rod, a screw position and rotation speed, and a measurement completion position of material to be supplied from the hopper. These operations and the like can be played back and confirmed using the preview display function 1, and thus the function assists in the confirmation tasks of the ejector operation in the setting process, which is particularly complicated to set, or the like, and in confirming each operation position, and visually confirming a speed or the like to confirm setting appropriateness and make modifications.

The preview display function 1 includes the function for setting the operations of the injection molding machine 10, in whole or in part, on the setting screen 2, the function for displaying the preview display screen 4 for displaying the operations thus set, and the function for playing back the operations on the preview display screen 4 thus displayed.

The operation setting of the injection molding machine 10, in whole or in part, on the setting screen 2 is performed on the setting screen 2 of the display device 14 having the form illustrated in Fig. 1 and Fig. 2. The items and layout displayed on this setting screen 2 are not particularly limited, and selecting an operation setting of an object displays a setting screen including items corresponding to the operation setting. The examples of Fig. 1 and Fig. 2 illustrate the setting screen 2 for setting the ejector operation of an ejector mechanism provided to the mold clamping device 13. In the example of Fig. 1, a setting item button group 6 for inputting setting values in the operation sequence is displayed on the setting screen 2 on the left side of the screen. In the example of Fig. 1, as the setting item button group 6, ejection pressure, ejection speed, advance limit, and the like are displayed, and these values are input in order.

In the example of Fig. 1, the preview display screen 4 for displaying the set operations is displayed by touching a preview button 3 disposed at the lower right of the screen. As a result, the preview display screen 4 appears on the right side of the screen.

In the example of Fig. 1, the operations on the displayed preview display screen 4 are played back by touching a play button 5 at the lower left of the preview display screen 4. In Fig. 1, a moving image of an ejector rod 42 is played back. This way, the setting screen 2 and the preview display screen 4 are simultaneously displayed side by side, making it possible to modify the operations on the setting screen 2 while confirming the moving image played back on the preview display screen 4.

Fig. 2 is an example of another embodiment. For the operation setting, the setting value is input while touching the screen displayed in graphical form on the setting screen 2 on the left side of the screen. The touched value can also be displayed as a set value display screen on the right screen as needed. Although the set value display screen is not displayed in Fig. 2, if the set value display screen is displayed, the setting screen 2 used for input and the set value display screen 7 for displaying the input numerical value are simultaneously displayed, making it easy to confirm the value input by touch on the set value display screen.

The preview display screen 4 is displayed by touching the preview button 3 at the lower right of Fig. 2, and the preview display screen 4 appears on the right screen.

The operation is played back by touching the play button 5 at the lower left of the preview display screen 4 in the same manner as described above and, in the example of Fig. 2, the moving image of the ejector rod 42 is played back. In this case as well, the setting screen 2 used for input and the preview display screen 4 are simultaneously displayed side by side, making it possible to modify the operations on the setting screen 2 while confirming the moving image played back on the preview display screen 4.

On the display screen in Fig. 1 and Fig. 2, display of the preview display screen 4 or playback of the operations on the preview display screen 4 is performed by selecting a corresponding button provided on the setting screen 2 or the preview display screen 4. In this way, a touch panel function can be utilized to display the preview display screen 4 or play back the operations. It should be noted that a button type of the setting screen 2 and the preview display screen 4 preferably adopted is a touch panel, but may be conventional buttons and are not particularly limited. Further, the items displayed as the setting item button group and the layout thereof, and the set value display screen provided as needed and the layout thereof are all arbitrary and not particularly limited, but can be configured arbitrarily in response to setting objects (for example, the mold clamping operation, the mold closing and mold opening operation, the ejector operation, the screw operation, the taking-out machine operation, and the like).

With regard to playback, the operations thus set are played back as a moving image displayed three dimensionally or two dimensionally. With such playback, the operations are displayed three dimensionally or two dimensionally and can further be played back as a moving image, making it possible to easily confirm the set operations.

In the preview of the mold closing and opening operation of the mold 21, a speed of any operation among the mold closing and opening operation of the mold 21 is set to 100%, and the speed of the other mold closing and opening operations is slowed down with respect to the 100% operation speed. By doing so, the mold closing and opening operation speed of the mold 21, which is relatively fast, is set to 100%, resulting in the advantage that the other mold closing and opening operations can be easily viewed and easily confirmed.

To make it easier to confirm the operations to be played back, it is desirable that a playback speed of any operation among the operations is set to 100%, and the playback speed of the other operations is slowed down with respect to the operation having the 100% playback speed. In this way, the playback speed of a fast operation is set to 100%, making the playback speed of the other operations slower and easy to view and the operations easy to confirm. Here, "100%" is the upper-limit playback speed that can be followed by the eye during playback and, by setting, among the operations of the object, the fastest operation or a fast operation that is not the fastest but is a main operation to 100%, the other operations can be relatively slowed down.

At the time of playback, preferably a gauge 8 is displayed on the preview display screen 4 as illustrated in Fig. 1 and Fig. 2. In this way, the position or the like of an operation can be confirmed using the displayed gauge 8. A scale width of the gauge 8 can be changed on the screen. The gauge 8 is preferably displayed on the same screen as the preview display screen 4, and the position of an operation can be easily confirmed.

It should be noted that the preview display screen 4, and the mold clamping device 13, the mold 21, an ejector device, the screw 31, and other objects to be played back are stored in advance as images and displayed as a moving image in response to input settings.

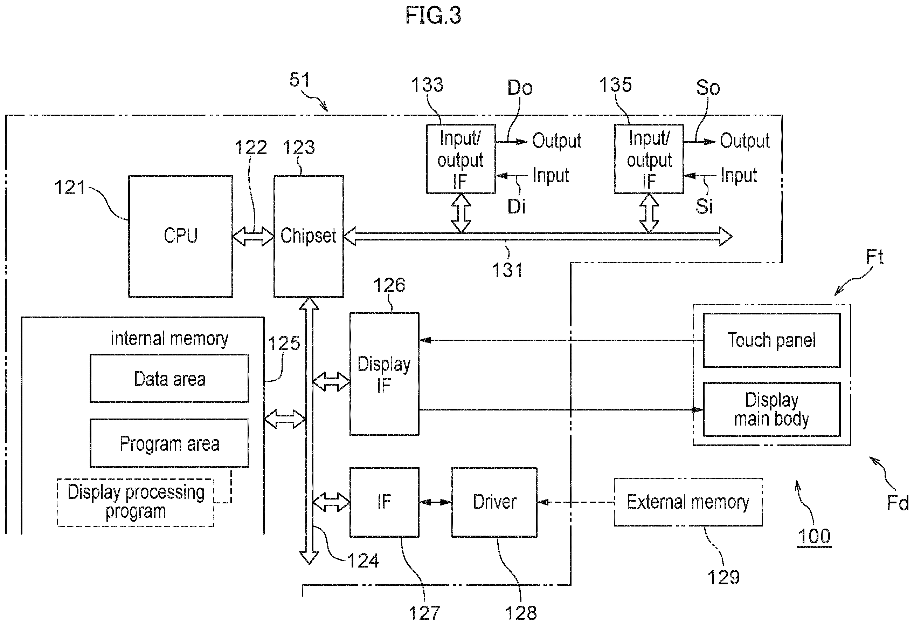

Fig. 3 is a schematic system diagram of the control device 51 that controls the preview display function 1. The control device 51 is not limited to the example of Fig. 3 as long as configured to be capable of controlling the preview display function 1. The control device 51 is mainly constituted by a central processing unit (CPU) 121, a chipset 123, an internal memory 125, and the like. The chipset 123 is connected to the CPU 121 via an internal bus 122. A bus line 124 that uses a local bus such as a peripheral component interconnect (PCI) bus is connected to the chipset 123 to constitute a human machine interface (HMI) control system. The internal memory 125 including various memories such as random-access memory (RAM) and read-only memory (ROM) is connected to the bus line 124. Furthermore, a display device 100 is connected to the bus line 124 via a display interface 126, and a driver 128 that reads and writes to an external memory 129 composed of a storage medium such as a memory card is connected to the bus line 124 via an input/output interface 127. In this case, the display device 100 includes a display Fd to which a touch panel Ft is attached.

A bus line 131 similar to the bus line 124 is connected to the chipset 123 to constitute a programmable logic controller (PLC) control system. An input/output interface 133 that assigns switching data Di of a switch or the like to the CPU 121 and assigns control command data Do obtained from the CPU 121 to corresponding actuators is connected to the bus line 131, and an input/output interface 135 that carries out analog-digital conversion on and assigns detection signals Si of various sensors to the CPU 121 and assigns control signals So obtained by digital-analog conversion of control command data obtained from the CPU 121 to corresponding actuators is connected to the bus line 131. As a result, a predetermined feedback control system and an open loop control system are configured.

The internal memory 125 stores a PLC program and an HMI program as well as various processing programs. It should be noted that the PLC program is software for realizing the sequence operations of various functions in the injection molding machine, the monitoring of the injection molding machine, and the like, and the HMI program is software for realizing the setting and display of operation parameters of the injection molding machine, the display of operation monitoring data of the injection molding machine, and the like.

Based on such an example of the control device 51, the preview display function 1 according to the present invention can be controlled to display the preview display screen 4. According to the preview display function 1, the operations of various settings of an injection molding machine are played back and displayed on the preview display screen 4, making it possible to simulate operations before actually operating the injection molding machine and prevent damage to the molding machine, the taking-out machine, and the mold caused by a setting error.

### Descriptions of Reference Numerals

- 1: Preview display function
- 2: Setting screen
- 3: Preview button
- 4: Preview display screen
- 5: Play button
- 6: Setting item button group
- 8: Scale display
- 10: Injection molding machine
- 11: Machine base
- 12: Injection device
- 13: Mold clamping device
- 14: Display device
- 17: Heating cylinder
- 18: Hopper
- 19: Injection cylinder
- 20: Cover
- 21: Mold
- 21a: Fixed mold
- 21b: Movable mold
- 22: Tie bar
- 23: Toggle link
- 24: Crosshead
- 25: Mold clamping drive part
- 29: Safety door
- 30: Cover
- 31: Screw
- 31a: Screw tip end
- 32: Tip-end nozzle
- 33: Heater
- 40: Ejector device
- 41: Ejector base
- 42: Ejector rod
- 51: Control device
- 100: Display device
- 121: CPU
- 123: Chipset
- 124: Bus line
- 125: Internal memory
- 126: Display interface
- 127: Input/output interface
- 128: Driver
- 129: External memory
- 131: Bus line
- 133: Input/output interface
- 135: Input/output interface
- Ft: Touch panel
- Fd: Display

## Claims

1. A preview display function for displaying a preview of operations of an injection molding machine, in whole or in part, the preview display function comprising:
a function for setting the operations of the injection molding machine, in whole or in part, on a setting screen;
a function for displaying a preview display screen for displaying the operations thus set; and
a function for playing back the operations on the preview display screen thus displayed.

2. The preview display function according to claim 1, wherein
the operations thus set are played back as a moving image displayed three dimensionally or two dimensionally.

3. The preview display function according to claim 1 or 2, wherein
the setting screen and the preview display screen are displayed side by side.

4. The preview display function according to any one of claims 1 to 3, wherein
the operations thus set are operations of the injection molding machine, in whole or in part, selected from a mold clamping operation, a mold closing and mold opening operation, an ejector operation, a screw operation, a taking-out machine operation, and the like.

5. The preview display function according to any one of claims 1 to 4, wherein
a gauge is displayed on the preview display screen.

6. The preview display function according to claim 5, wherein
the gauge is displayed on the same screen as the preview display screen.

7. The preview display function according to any one of claims 1 to 6, wherein
a playback speed of any operation among the operations is set to 100%, and the playback speed of the other operations is slowed down with respect to the operation having the 100% playback speed.

8. The preview display function according to any one of claims 1 to 7, wherein
display of the preview display screen or playback of the operations on the preview display screen is performed by selecting a corresponding button provided on the setting screen or the preview display screen.

9. An injection molding machine comprising the preview display function according to any one of claims 1 to 8.
